# EUROPÄISCHE PATENTSCHRIFT

(11) **EP 0 832 003 B1**
(45) Veröffentlichungstag und Bekanntmachung des Hinweises auf die Patenterteilung: **22.03.2000**
(21) Anmeldenummer: 96921891.6
(22) Anmeldetag: 28.06.1996
(51) Int. Cl.: B60J 1/17, E05F 15/16, B60J 7/057

(54) **VORRICHTUNG ZUM VERSTELLEN TRANSLATORISCH VERSTELLBARER BAUTEILE IN KRAFTFAHRZEUGEN**
DEVICE FOR DISPLACING TRANSLATIONALLY DISPLACEABLE COMPONENTS IN MOTOR VEHICLES
DISPOSITIF PERMETTANT DE DEPLACER DES ELEMENTS CONSTITUTIFS A DEPLACEMENT TRANSLATOIRE DANS DES AUTOMOBILES

(30) Priorität: 28.06.1995 DE 19525020
(43) Veröffentlichungstag der Anmeldung: 01.04.1998
(73) Patentinhaber: Brose Fahrzeugteile GmbH & Co. KG, 96450 Coburg (DE)
(72) Erfinder: SESSELMANN, Helmut, D-96523 Steinach (DE)
(74) Vertreter: Maikowski, Michael, Dipl.-Ing. Dr.
(86) Internationale Anmeldenummer: DE9601196
(87) Internationale Veröffentlichungsnummer: WO9701454

(56) Entgegenhaltungen:
- EP-A- 0 208 237
- DE-A- 3 416 103
- DE-A- 3 841 781
- DE-A- 4 316 651
- DE-A- 4 428 262
- US-A- 4 389 818

## Beschreibung

Die Erfindung bezieht sich auf eine Vorichtung zum Verstellen translatorisch verstellbarer Bauteile in Kraftfahrzeugen wie Fensterheber, Schiebedächer und dergleichen.

Eine derartige Vorrichtung ist aus der EP 0 208 237 B1 bekannt. Sie besteht aus einer Kombination einer Fensterscheibe eines Kraftfahrzeugs mit einem Scheiben-Mitnehmer, der die Fensterscheibe mit einer Führungsvorrichtung verbindet und über ein Seil sowie Umlenkrollen mit einer ortsfesten Antriebseinrichtung zum translatorischen Verstellen der Fensterscheibe verbunden ist. Die Verbindung zwischen dem Mitnehmer und der Fensterscheibe wird durch ein in der Fensterscheibe angeordnetes Durchgangsloch und einen durch das Durchgangsloch gesteckten und mit dem Mitnehmer verbundenen Stift hergestellt. Zur Führung der Fensterscheibe sind am Mitnehmer Stütz- und Hilfsflügel vorgesehen, die sich vom Mitnehmer zu den Oberflächen der Fensterscheibe erstrecken. Die Unterkante der Fensterscheibe liegt auf elastisch verformbaren Elementen des Mitnehmers auf, um Spielfreiheit zu erzeugen und Klappergeräusche zwischen dem Mitnehmer und der Fensterscheibe zu vermeiden.

Vorichtungen zum Verstellen translatorisch verstellbarer Bauteile in Kraftfahrzeugen werden üblicherweise an Grundplatten, Türinnenbleche oder Karosserieteile eines Kraftfahrzeuges angeschraubt, vernietet oder mit Führungsschienen partiell verschweißt. Die Befestigung der Antriebseinrichtungen an dem betreffenden Basisteil erfordert somit eine bestimmte, durch die statischen Bedingungen vorgegebene Anzahl von Befestigungselementen, die in mehreren Arbeitsschritten angebracht und bei einer notwendig werdenden Reperatur wieder entfernt werden müssen. Neben den zusätzlichen Einzelteilen erfordert die Befestigung der Antriebseinrichtungen an den Basisteilen zusätzliche technologische Verfahrensschritte, die Montagezeit und damit zusätzliche Kosten verursachen.

Zur Verringerung der Belastung von Teilen der Antriebseinrichtung, wie Antriebsmotor oder Seil eines Seil-Fensterhebers, sind Systemdämpfungen erforderlich, die bei Schaltvorgängen und bei Erreichen eines Anschlages wirksam werden und Belastungsspitzen abfangen bzw. dynamische Belastungsspitzen dämpfen. Diese Dämpfung des Systems erfolgt bislang grundsätzlich im Innenraum des Getriebes der Antriebseinrichtung, beispielsweise in Form von formschlüssigen Dämpfungskammern im Schneckenrad des Getriebes der Antriebseinrichtung. Zwischen dem Mitnehmer und dem Schneckenrad werden radial Dämpfungsgummis angeordnet, die eine gezielte Energieumwandlung durch Walkarbeit in Abhängigkeit vom Drehmoment bewirken und damit dynamische Belastungsspitzen abfangen.

Die innerhalb des Getriebegehäuses angeordneten Dämpfungselemente benötigen einen zusätzlichen Anteil an dem Getriebebauraum und reduzieren damit die effektive Führungslänge von Schneckenrad und Mitnehmer auf der feststehenden Achse bzw. führen zu einer Vergrößerung der Außenabmessungen des Getriebegehäuses und damit der Antriebseinrichtung. Unter Last kommt es zudem zu schlechten Zahneingriffsverhältnissen und zu einer unerwünschten axialen Ausdehnung des Gummidämpfers, so daß ein vorzeitiger Verschleiß bzw. die Gefahr einer Funktionsunfähigkeit droht. Weiterhin wird der Wirkungsgrad der Antriebseinrichtung verschlechtert.

Aufgabe der vorliegenden Erfindung ist es, eine Antriebseinrichtung für translatorisch verstellbare Bauteile in Kraftfahrzeugen zu schaffen, die eine einfache Montage und Demontage mit geringem Zeitaufwand gestattet und eine Dämpfung des Antriebssystems ohne negative Einflüsse auf Getriebeelemente ermöglicht.

Diese Aufgabe wird durch die Schaffung einer Vorrichtung zum Verstellen translatorisch verstellbarer Bauteile mit den Merkmalen des Anspruchs 1 gelöst.

Die erfindungsgemäße Lösung verkürzt den Montage- bzw. Demontageprozeß für die Antriebseinrichtung deutlich und benötigt wesentlich weniger Einzelteile für die Befestigung der Antriebseinrichtung bzw. deren Verbindung mit dem translatorisch verstellbaren Bauteil. Die Verlagerung der Dämpfung des Antriebssystems außerhalb des Getriebebauraumes schafft eine kostengünstige Dämpfung und einen flacheren Aufbau der Antriebseinrichtung, ermöglicht eine steifere Verrippung des Schneckenrades sowie eine Verbesserung der Führungslänge auf der Achse sowie weiterhin eine akustische Entkopplung der Antriebseinrichtung von dem Basisteil zur Aufnahme des translatorisch verstellbaren Bauteils bzw. von dem translatorisch verstellbaren Bauteil bei einer montagefreundlichen Anordnung der betreffenden Dämpfungselemente.

Die erfindungsgemäße Lösung ist sowohl auf stationäre Bauelemente des translatorisch verstellbaren Bauteiles oder eines Bauelementes zur Aufnahme des translatorischen Bauteiles als auch auf bewegliche Bauelemente des translatorisch verstellbaren Bauteiles anwendbar. In beiden Anwendungsfällen ergeben sich die Vorteile einer vereinfachten und kostenreduzierten Montage bzw. Demontage sowie einer optimalen Dämpfung des Antriebssystems unter Einhaltung einer geringen Baugröße sowie maximaler Stabilität der Antriebseinrichtung und einer Verringerung der Übertragung von Antriebsgeräuschen auf Karosserieteile und/oder die translatorisch verstellbaren Bauteile.

Das Basisteil kann aus einem stationären oder beweglichen Bauelement des translatorisch verstellbaren Bauteils oder der Vorrichtung zur Aufnahme des translatorisch verstellbaren Bauteiles bestehen. Im Falle eines stationären Bauelements weist dieses mehrere Aussparungen bzw. Durchzüge zur Aufnahme der Achse sowie von Befestigungselementen der Antriebseinrichtung und den Dämpfungselementen auf. Im Falle eines beweglichen Bauelements ist dieses über die Antriebseinrichtung gegenüber den stationären Bauelementen des Bauteiles oder der Vorrichtung zur Aufnahme des Bauteiles verstellbar, weist eine Aussparung zur Aufnahme der Achse auf und ist über federelastisch ausgebildete Stützstellen mit der Antriebseinrichtung verbunden.

Die aus der EP 0 208 237 B1 bekannte Verstellvorrichtung weist im Unterschied zum Gegenstand der vorliegenden Erfindung keine Antriebseinrichtung auf, sondern ist mit einem Kraftübertragungselement in Form eines Seils verbunden, so daß nur entsprechend ausgerichtete translatorische Kräfte zur Auswirkung kommen. Da keine Drehmomentbelastung erfolgen kann, tritt auch kein Verschwenken des Mitnehmers um die durch das Durchgangsloch der Fensterscheibe gesteckte Achse aufgrund der Reaktionskräfte bei einer Drehbewegung der Antriebseinrichtung in der einen oder anderen Richtung auf, sondern die Verbindung dient ausschließlich der Anbindung des Mitnehmers an die Fensterscheibe. Die federnde Auflage des Mitnehmers zur Aufnahme der Unterkante der Fensterscheibe dient dabei ausschließlich zum Ausgleich von Relativbewegungen zwischen der Fensterscheibe und dem Mitnehmer, um auf diese Weise Toleranzen zwischen dem Mitnehmer und der Fensterscheibe auszugleichen.

Eine vorteilhafte Ausgestaltung der erfindungsgemäßen Lösung ist dadurch gekennzeichnet, daß das Getriebegehäuse der Antriebseinrichtung einen sich axial erstreckenden Ringbund sowie mehrere außerhalb der Achse des Ringbundes und des Getriebegehäuses angeordnete, radial zueinander beabstandete Befestigungs- und Dämpfungselemente aufweist.

Neben einer weiteren Erleichterung der Montage wird eine auf die jeweiligen Bedürfnisse abgestimmte Befestigung und Dämpfung des Systems geschaffen, so daß die Antriebseinrichtung kostengünstig vom tragenden Bauelement entkoppelt wird.

Zur zusätzlichen Versteifung des Systems sind die Befestigungsmittel und die Einrichtungen an dem stationären Bauelement zur Aufnahme der Befestigungsmittel geometrisch aufeinander abgestimmt.

Die Befestigungselemente können aus Hut- oder Kugelbolzen bestehen, die durch an den Durchmesser der Bolzenköpfe angepaßte Bohrungen des stationären Bauelementes steckbar und durch Verdrehen der Antriebseinrichtung in radial verlaufende, dem Durchmesser der Bolzenstifte angepaßte Aussparungen einsetzbar sind, wobei die Antriebseinrichtung in der Betriebsstellung mittels der Dämpfungselemente gegenüber einem Verdrehen sicherbar ist.

Bei einer unmittelbaren Verbindung der Antriebseinrichtung mit dem beweglichen Bauelement des translatorisch verstellbaren Bauteils weist das bewegliche Bauelement vorzugsweise eine Bohrung zur Aufnahme eines mit der Antriebseinrichtung verbundenen oder verbindbaren Befestigungsbolzens und zumindest eine, vorzugsweise zwei zu beiden Seiten der Bohrung angeordnete Stützstellen zur Aufnahme von Dämpfungselementen auf.

Diese Ausgestaltung der erfindungsgemäßen Lösung ergibt eine vorteilhafte Integration von bewegtem Bauelement und Antriebseinrichtung, die gemeinsam geschützt angeordnet werden können. Im Falle eines in eine Kraftfahrzeugtür integrierten Scheibenhebers wird beim Türzuschlagen oder beim Einwirken seitlicher Kraftkomponenten verhindert, daß sich der Antriebsmotor um seine Querachse drehen kann, während gleichzeitig die Dämpfungselemente die Fensterscheibe und den Motor vor einer Zerstörung schützen. Bei einer Anordnung von zwei vorgespannten Dämpfungselementen werden zusätzlich Toleranzen der Bohrung zur Aufnahme des mit der Antriebseinrichtung verbundenen oder verbindbaren Befestigungsbolzens ausgeglichen.

Eine Weiterbildung der erfindungsgemäßen Lösung ist dadurch gekennzeichnet, daß das Getriebe der Antriebseinrichtung zweistufig aufgebaut ist. Durch die Zweistufigkeit wird eine extrem flache und schmale (höhenminimierte) Antriebseinrichtung geschaffen, die sich besonders vorteilhaft in schmalen Bauräumen anordnen läßt.

Eine weitere vorteilhafte Ausgestaltung ist dadurch gekennzeichnet, daß der Abtrieb der Antriebseinrichtung als Hohlwelle mit Formschlußelementen derartig ausgebildet ist, daß die Antriebseinrichtung auf beiden Stirnseiten mit einem Ritzel oder einer Seiltrommel zum Antrieb des translatorisch verstellbaren Bauteiles verbindbar und damit universell ausrüstbar ist. Bei Verwendung für einen Fensterheber ist es nicht mehr notwendig, separate linke und rechte Ausführungsvarianten zur Verfügung zu stellen.

Anhand von in der Zeichnung dargestellten Ausführungsbeispielen soll der der Erfindung zugrundeliegende Gedanke näher erläutert werden. Es zeigen:
- Figur 1: eine schematische Darstellung eines Seil-Fensterhebers mit an der Fensterscheibe befestigter Antriebseinrichtung;
- Figur 2: eine detailierte Darstellung der Antriebseinrichtung und deren Verbindung mit einer Fensterscheibe entsprechend der schematischen Darstellung gemäß Figur 1;
- Figur 3: einen Schnitt durch die Dämpfungseinrichtung entlang der Linie A-A gemäß Figur 2;
- Figur 4: eine Ansicht auf die Dämpfungseinrichtung in Richtung des Pfeiles X gemäß Figur 2;
- Figur 5: eine Draufsicht auf eine Antriebseinrichtung mit Befestigungs- und Dämpfungselementen zur Verbindung mit einem stationären Bauelement;
- Figur 6: einen Schnitt entlang der Linie B-B in der Anordnung gemäß Figur 5;
- Figur 7: einen Längsschnitt durch ein Türinnenblech oder Türmodul zur Aufnahme einer Antriebseinrichtung und
- Figur 8: eine Teilansicht der Befestigungseinrichtung zur Verbindung der Antriebseinrichtung mit einem Türinnenblech oder Türmodul gemäß Figur 7.

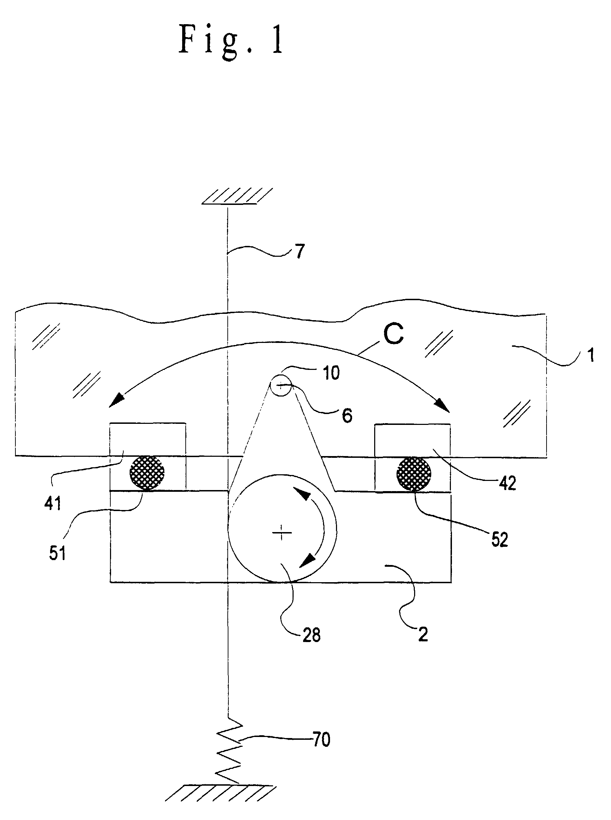

Die schematische Darstellung gemäß Figur 1 zeigt einen Seil-Fensterheber mit einer Fensterscheibe 1, an der eine Antriebseinrichtung 2 befestigt ist, die Teil eines vorzugsweise in einer Scheibenführungsvorrichtung geführten Mitnehmers ist und die mit einem Seil 7 zur translatorischen Verstellung der Einheit aus Fensterscheibe 1 und Antriebseinrichtung 2 verbunden ist. Das Seil 7 ist an einer oberen und unteren Seileinhängung befestigt, wobei im Bereich der unteren Seileinhängung ein Seillängenausgleich 70 vorgesehen ist. Die Verbindung zwischen Fensterscheibe 1 und Antriebseinrichtung 2 erfolgt über eine Scheibenanbindung, die aus einer Achse 6 und einer in der Fensterscheibe 1 vorgesehene Aussparung 10 zur Aufnahme der Achse 6 (Befestigungsbolzen) besteht. Die Antriebseinrichtung 2 ist um diese Scheibenanbindung 6, 10 in Richtung des Pfeiles C schwenkbar.

Zu beiden Seiten der Scheibenanbindung 6, 10 befinden sich Befestigungslaschen 41, 42 für die Seitenstabilisierung und Dämpfung der Anordnung beim Einwirken äußerer Kräfte auf den Seil-Fensterheber, in die Gummiformelemente 51, 52 eingelegt sind, in die die Unterkante 100 der Fensterscheibe 1 bei der Befestigung der Antriebseinrichtung 2 eingelegt wird.

Die Verbindung der Antriebseinrichtung 2 mit dem Seil 7 erfolgt über eine Seiltrommel 28 in an sich bekannter Weise. Alternativ zu der in Figur 1 schematisch dargestellten Anordnung eines Seil-Fensterhebers kann das Prinzip der Befestigung der Antriebseinrichtung 2 an der Fensterscheibe 1 auch bei einem Kreuzarm-Fensterheber oder einem Fensterheber mit formschlüssigen Kraftübertragungselementen angewandt werden, die in der Türkarosserie befestigt werden.

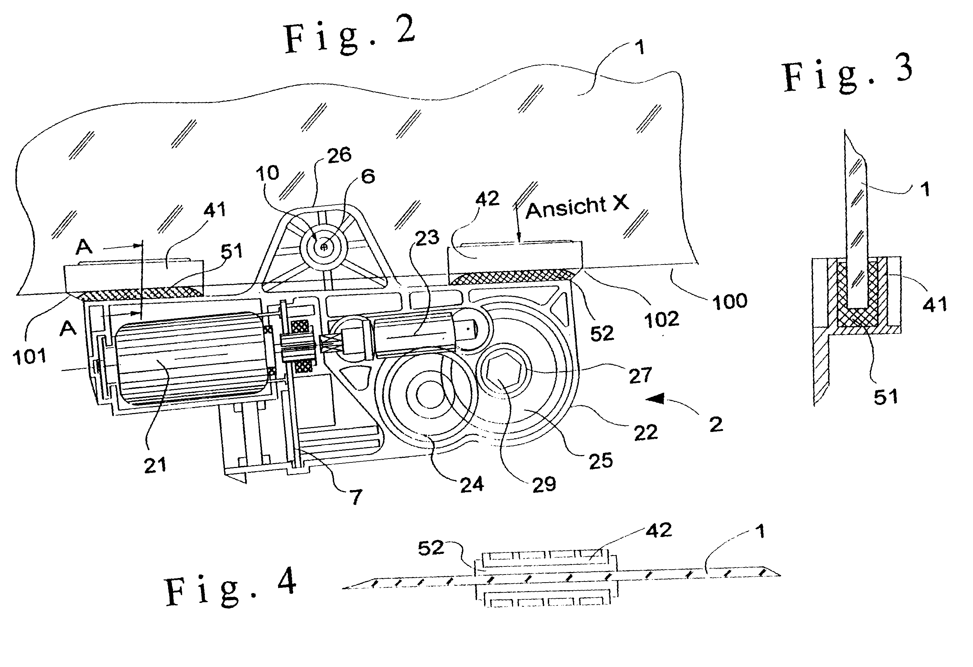

Die Figuren 2 bis 4 zeigen die detaillierte Anordnung zur schematischen Darstellung gemäß Figur 1.

Die Antriebseinrichtung 2 enthält einen Antriebsmotor 21 und ein Getriebe 22, das die mit der Motorwelle verbundene Antriebsschnecke 23 sowie zwei abgestufte Getrieberäder 24, 25 für ein zweistufiges Getriebe, das aus einem mit der Antriebsschnecke 23 kämmenden Schneckenrad mit Ritzel 24 und einem Zahnrad 25 besteht, aufweist. Mittels eines Formschlußelementes 29 ist ein Abtriebselement (Ritzel) auf die Achse des Zahnrades 25 aufklipsbar, das kraft- und/oder formschlüssig mit dem Seil 7 oder einer Zahnstange verbunden, so daß bei Rechts- oder Linkslauf des Motors die Antriebseinheit 2 zusammen mit der Fensterscheibe 1 auf- oder abwärts bewegt wird. Da das Abtriebselement auf die eine oder andere Seite des Getriebes aufklipsbar ist, kann die beschriebene Vorrichtung sowohl für eine rechts- als auch für eine linksseitige Anordnung verwendet werden.

Die Verbindung der Fensterscheibe 1 mit der Antriebseinheit 2 erfolgt über ein am Getriebegehäuse befindliches Befestigungsauge 26, über das die Antriebseinheit formschlüssig in einer Bohrung 10 der Fensterscheibe 1 befestigt wird. Die Befestigung erfolgt über eine Achse 6, die vorzugsweise als Kunststoffbolzen ausgebildet ist, so daß sich die Antriebseinheit 2 geringfügig um die Scheibenanbindung 6, 10 drehen kann.

Zu beiden Seiten der Scheibenanbindung 6, 10 befinden sich Dämpfungseinrichtungen, die aus Befestigungslaschen 41, 42 mit darin eingelegten Gummiformelementen 51, 52 bestehen. In diese Befestigungslaschen 41, 42 wird die Scheibenunterkante 100 eingesetzt, so daß die Abstützstellen 101, 102 der Scheibenunterkante 100 auf den Gummiformelementen 51, 52 aufliegen und damit entsprechend der Geometrie und Shorehärte der Gummiformelemente 51, 52 die gedämpfte Drehbewegung der Antriebseinheit 2 um die Scheibenanbindung 6, 10 begrenzen. Eine derartige Bewegung der Antriebseinrichtung 2 um die Scheibenanbindung 6, 10 ergibt sich daraus, daß bei Rechts- oder Linkslauf des Antriebsmotors 21 der Getriebeblock durch die Seilkräfte um die Scheibenanbindung 6, 10 ein Drehmoment erzeugt wird, wobei der Verdrehwinkel abhängig von der Geometrie und der Shorehärte der Gummiformelemente 51, 52 ist.

Die Fensterscheibe liegt dabei an der Flanke der Gummiformelemente 51, 52 stets an, so daß sich beim Türzuschlagen oder bei seitlichen Kraftkomponenten der Antriebsmotor 21 nicht um seine Querachse drehen kann. Gleichzeitig schützen die Gummiformelemente 51, 52 die Fensterscheibe 1 und den Antriebsmotor 21 beim Türzuschlagen vor Zerstörung.

Unter anderem durch den Aufbau eines zweistufigen Getriebes ist die Voraussetzung für einen extrem flachen und schmalen Motor- und Getriebeblock geschaffen, der im Systemschwerpunkt über das am Getriebegehäuse befindliche Befestigungsauge 26 formschlüssig im Scheibenloch 10 befestigbar ist.

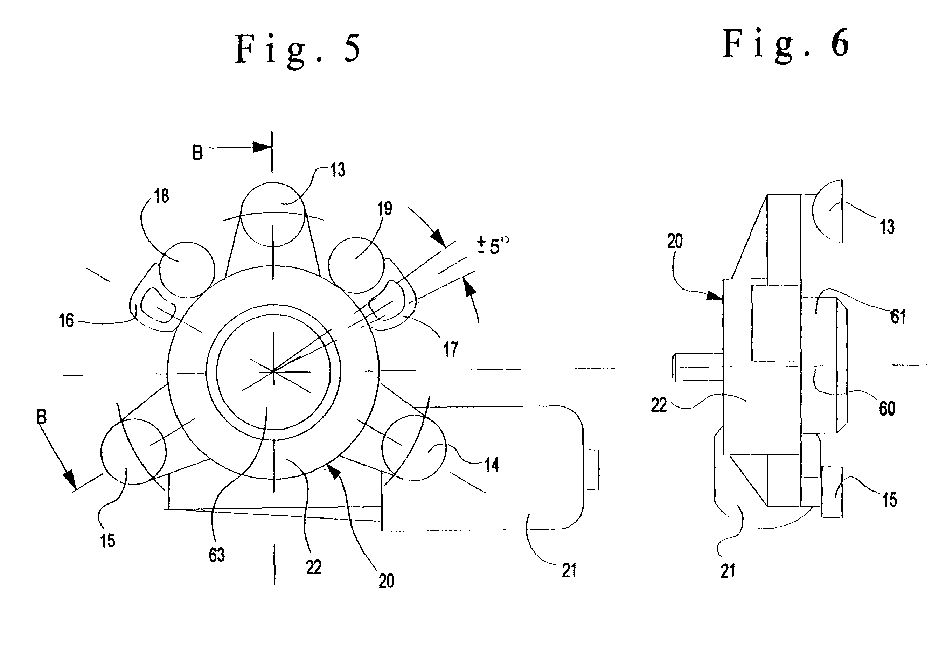

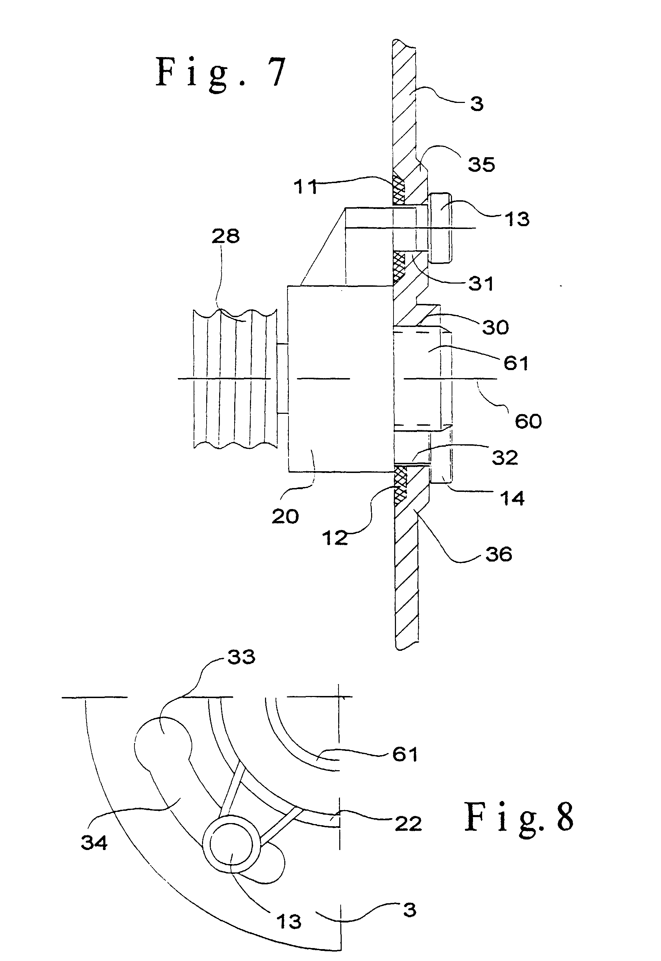

In den Figuren 5 bis 8 ist in einer Draufsicht, einer Seitenansicht, einem Längsschnitt und einer Teilansicht eine Antriebseinheit dargestellt, die mit einem stationären Bauelement, insbesondere mit einer Grundplatte, bzw. einem Türinnenblech oder Türmodul für eine Fensterheber-Antriebseinheit verbunden werden kann. Zu diesem Zweck weist das Getriebegehäuse 20 einen Ringbund 61 auf, der gemäß Figur 7 in einen paßgenauen Durchzug 30 einer Grundplatte bzw. eines Türmoduls 3 einsetzbar ist. Auf der Achse 60 des Getriebegehäuses 20 ist wahlweise eine Seiltrommel oder ein Ritzel zur Betätigung des translatorisch verstellbaren Bauteiles befestigbar, während der Antrieb über einen Antriebsmotor 21 und ein Getriebe 22 gemäß den Figuren 5 und 6 erfolgt.

Weit außerhalb der Achse 60 des Getriebegehäuses 20 sind Hut- oder Kugelbolzen 13 bis 15 angeordnet, die in Bohrungen 33 gemäß Figur 8 in der Grundplatte bzw. im Türinnenblech oder Türmodul 3 zur Aufnahme der Antriebseinheit einsetzbar sind. Der Durchmesser der Bohrungen 33 entspricht dem Durchmesser der Bolzenköpfe der Hut- oder Kugelbolzen 13 bis 15, so daß diese durch die Grundplatte, das Türinnenblech oder Türmodul 3 durchgeschoben werden können. Infolge der Zentrierung des Getriebegehäuses 20 mittels des Ringbundes 61 erfolgt eine exakte Lagefestlegung der Antriebseinheit aus Antriebsmotor 21 und Getriebe 22. Nach dieser Lagefestlegung wird das Getriebegehäuse 20 in die Betriebsstellung gedreht, so daß die Bolzenköpfe der Hut- oder Kugelbolzen 13 bis 15 auf der Außenfläche der Grundplatte, des Türinnenbleches oder Türmoduls 3 zur Anlage kommen, während die Bolzenstifte durch die entsprechenden Aussparungen 34 gesteckt sind (Figur 8).

Das Getriebegehäuse 20 weist weiterhin Dämpfungselemente 16, 17 auf, die mit Dämpfungselementen 18, 19 im Eingriff stehen, die in die Grundplatte, das Türinnenblech bzw. Türmodul 3 einsetzbar sind. Nachdem die Antriebseinheit nach dem Einsetzen in die Bohrungen bzw. Aussparungen 30, 33, 34 der Grundplatte, des Türinnenbleches oder Türmoduls 3 eingesetzt und in die Betriebsstellung verdreht wurde, wird die Antriebseinheit mit den Dämpfungselementen 16 bis 19 gegen Verdrehungen gesichert, die nicht über das vorgeschriebene Maß der Dämpfungsrate hinausgehen. Dadurch verdreht sich die Antriebseinheit unter Last um maximal ± 5° um den Achse 60, wobei die Vorspannung der Dämpfungselemente 16 bis 19 und deren Shorehärte den gewünschten Verdrehwinkel und damit die Dämpfungsrate bestimmen. Auf diese Weise kann die Antriebseinheit weich in die Anschläge einfahren, ohne daß bei Einsatz eines Zahnsegment-Fensterhebers als translatorisch verstellbarem Bauteil der Achsabstand verändert wird.

Die Anordnung der Hut- oder Kugelbolzen 13 bis 15 erfolgt vorzugsweise in Sicken im Türinnenblech, der Grundplatte oder dem Türmodul, wobei in die Vertiefungen der Sicken Gummischeiben 11, 12 zur akkustischen Entkopplung einsetzbar sind, so daß eine Übertragung der Antriebsgeräusche auf das betreffende stationäre Bauelement minimiert wird.

Anstelle von Hut- oder Kugelbolzen sind auch andere geometrische Formen dieser Befestigungselemente möglich, wobei vorzugsweise die Einsatzfläche des Befestigungselementes in das stationäre Bauelement als entsprechende Gegenform ausgebildet wird, so daß eine zusätzliche Verstärkung der Gesamtanordnung erzielt wird.

Infolge der erfindungsgemäßen Anordnung kann die Antriebseinheit leicht von innen oder von außen auf eine Grundplatte, ein Türinnenblech oder ein Türmodul gesteckt bzw. eingeklipst und kontaktiert werden. Damit ist eine Montage bzw. Demontage mit geringem Zeitaufwand möglich. Die Antriebseinheit kann wahlweise in Trocken- oder Naßraum angeordnet werden.

Zur Verbesserung der Gleitfähigkeit im notwendigen Drehwinkelbereich können Kunststoffteile eingebracht werden. Auch Gummischeiben sind bei entsprechender Shorehärte zur zusätzlichen Geräuschminimierung möglich. Die Gummischeiben bzw. Zwischenlagen aus Gummi 11, 12 entkoppeln die Antriebseinheit kostengünstig vom Türinnenblech, der Grundplatte bzw. dem Türmodul. Die drehwinkelbegrenzenden Gummielemente 18, 19 können in die Dämpfungskammern, die sich im Türinnenblechbereich befinden, montagefreundlich eingeschoben bzw. eingesteckt werden.

## Patentansprüche

1. Vorrichtung zum Verstellen translatorisch verstellbarer Bauteile (1, 3) in Kraftfahrzeugen wie Fensterheber, Schiebedächer oder dergleichen, die eine mit einer Antriebseinrichtung verbindbare Mitnehmervorrichtung für das translatorisch verstellbare Bauteil (1, 3) umfaßt, wobei
a) das translatorisch verstellbare Bauteil (1, 3) eine Bohrung (10) zur Aufnahme eines Verbindungsteils (6, 61) der Mitnehmervorrichtung aufweist,
b) die Mitnehmervorrichtung über eine Achse (6, 60) mit dem translatorisch verstellbaren Bauteil (1, 3) verbunden und um die Achse (6, 60) schwenkbar ist und
c) das translatorisch verstellbare Bauteil (1, 3) mittels Befestigungs- oder Stützelementen (13 bis 17; 41, 42) sowie elastischer Elemente (16 bis 19; 51, 52) an der Mitnehmervorrichtung abgestützt ist,
**dadurch gekennzeichnet,**
daß ein Antriebsmotor (21) und ein mit diesem zusammenwirkendes Verstellgetriebe (22) der Antriebseinrichtung (2) an der Mitnehmervorrichtung befestigt sind, wobei das Verstellgetriebe (22) über ein Antriebselement mit einem an der Fahrzeugkarosserie befestigten Kraftübertragungselement (7) gekoppelt ist, das die Bewegung des Antriebselementes in eine translatorische Bewegung der Mitnehmervorrichtung umsetzt, und wobei die elastischen Elemente (16 bis 19; 51, 52) derart ausgebildet sind, daß eine vorgebbare Dämpfung der Antriebseinrichtung (2) durch eine Schwenkbewegung der Mitnehmervorrichtung um die Achse (6, 60) erzielbar ist.

2. Vorrichtung nach Anspruch 1, **dadurch gekennzeichnet,** daß das translatorisch verstellbare Bauteil (3) mehrere Aussparungen bzw. Durchzüge (30 bis 34) zur Aufnahme der Achse (6, 60) sowie der Befestigungselemente (13 bis 17) der Antriebseinrichtung (2) aufweist.

3. Vorrichtung nach Anspruch 2, **dadurch gekennzeichnet,** daß das Getriebegehäuse (20) der Antriebseinrichtung (2) einen sich axial erstreckenden Ringbund (61) sowie mehrere außerhalb der Achse (60) des Ringbundes (61) und des Getriebegehäuses (20) angeordnete, radial zueinander beabstandete Befestigungs- und Dämpfungselemente (13 bis 15; 16 bis 19) aufweist.

4. Vorrichtung nach Anspruch 3, **dadurch gekennzeichnet,** daß die Befestigungsmittel (13 bis 15) und die Einrichtungen an dem translatorisch verstellbaren Bauteil (3) zur Aufnahme der Befestigungsmittel (13 bis 15) geometrisch aufeinander abgestimmt sind.

5. Vorrichtung nach mindestens einem der vorangehenden Ansprüche, **dadurch gekennzeichnet,** daß die Befestigungselemente (13 bis 15) aus Bolzen mit hut- oder kugelförmigen Köpfen bestehen, die durch an den Durchmesser der Bolzenköpfe angepaßte Bohrungen (33) des translatorisch verstellbaren Bauteils (3) steckbar und durch Verdrehen der Antriebseinrichtung (2) in radial verlaufende, dem Durchmesser der Bolzenstifte angepaßte Aussparungen (34) einsetzbar sind und daß die Antriebseinrichtung (2) in der Betriebsstellung mittels der Dämpfungselemente (16 bis 19) gegenüber Verdrehen sicherbar ist.

6. Vorrichtung nach mindestens einem der vorangehenden Ansprüche, **dadurch gekennzeichnet**, daß die Dämpfungselemente vorgespannt sind.

7. Vorrichtung nach Anspruch 1, **dadurch gekennzeichnet**, daß das translatorisch verstellbare Bauteil (1) über mindestens eine federelastisch ausgebildete Stützstelle (41, 51; 42, 52) mit der Antriebseinrichtung (2) verbunden ist.

8. Vorrichtung nach Anspruch 7, **dadurch gekennzeichnet,** daß durch die Bohrung (10) des translatorisch verstellbaren Bauteils (1) ein mit der Antriebseinrichtung (2) verbundener oder verbindbarer Befestigungsbolzen (61) gesteckt und daß zu beiden Seiten der Bohrung (10) Stützstellen (101, 102) zur Anordnung von Dämpfungselementen (51, 52) vorgesehen sind.

9. Vorrichtung nach Anspruch 8, **dadurch gekennzeichnet,** daß die Stützstellen (101, 102) an der Unterkante (100) einer Fensterscheibe (1) vorgesehen und formschlüssig in mit der Antriebseinrichtung (2) verbundenen Befestigungslaschen (41, 42) mit darin einlegbaren oder anspritzbaren elastischen Formelementen als Dämpfungselemente (51, 52) angeordnet sind.

10. Vorrichtung nach mindestens einem der vorangehenden Ansprüche, **dadurch gekennzeichnet,** daß das Getriebe (22) der Antriebseinrichtung (2) zweistufig (23, 24, 25) aufgebaut ist.

11. Vorrichtung nach mindestens einem der vorangehenden Ansprüche, **dadurch gekennzeichnet**, daß der Abtrieb der Antriebseinrichtung (2) als Hohlwelle mit Formschlußelementen derartig ausgebildet ist, daß die Antriebseinrichtung (2) auf beiden Stirnseiten mit einem Ritzel oder einer Seiltrommel zum Antrieb des translatorisch verstellbaren Bauteiles (1, 3) verbindbar ist.

## Claims

1. Device for displacing translationally displaceable components (1, 3) in motor vehicles, such as window lifters, sliding roofs or the like, which comprises a follower device connectable to a drive device and used for the translationally displaceable component (1,3) wherein
a) the translationally displaceable component part (1, 3) has a bore (10) for receiving a connecting part (6, 61) of the follower device,
b) the follower device is connected to the translationally displaceable component (1, 3) through an axis and is able to swivel about the axis (6, 60) and
c) the translationally displaceable component part (1, 3) is supported on the follower device by means of fastening or support elements (13 to 17; 41, 42) as well as elastic elements (16 to 19; 51, 52),
characterised in that
a drive motor (21) and a displacement gearing (22) of the drive device (2) interacting with same are fixed on the follower device wherein the displacement gearing (22) is coupled through a drive element to a force transfer element (7) which is fixed on the vehicle body and which converts the movement of the drive element into a translatory movement of the follower device, and wherein the elastic elements (16 to 19; 51, 52) are formed in such a way that a predeterminable damping of the drive device (2) can be achieved through swivel movement of the follower device about the axis (6, 60).

2. Device according to claim 1 characterised in that the translationally displaceable component (3) has several recesses or guides (30 to 34) for holding the axis (6, 60) as well as the fastening elements (13 to 17) of the drive device (2).

3. Device according to claim 2 characterised in that the gear housing (20) of the drive device (2) has an axially extending ring collar (61) as well as several fastening and damping elements (13 to 15; 16 to 19) spaced radially from each other and set outside of the axis (60) of the ring collar (61) and the gearing housing (20).

4. Device according to claim 3 characterised in that the fastening means (13 to 15) and the devices on the translationally displaceable component (3) for receiving the fastening means (13 to 15) are matched geometrically with each other.

5. Device according to at least one of the preceding claims characterised in that the fastening elements (13 to 15) consist of bolts with hat-shaped or spherical shaped heads which can be pushed through bores (33) in the translationally displaceable component (3) adapted to the diameter of the bolt heads and by turning the drive device (2) can be inserted in radially aligned recesses (34) adapted to the diameter of the bolt pins and that the drive device (2) can be secured against turning in the operating position by means of the damping elements (16 to 19).

6. Device according to at least one of the preceding claims characterised in that the damping elements are pretensioned.

7. Device according to claim 1 characterised in that the translationally displaceable component (1) is connected to the drive device (2) through at least one spring elastic support area (41, 51; 42, 52).

8. Device according to claim 7 characterised in that a fastening bolt (61) which is connected or able to be connected to the drive device (2) is pushed through the bore (10) of the translationally displaceable component (1) and that support areas (101, 102) are provided on each side of the bore (10) for mounting damping elements (51, 52).

9. Device according to claim 8 characterised in that the support areas (101, 102) are provided on the lower edge (100) of a window pane and are arranged with keyed engagement in fastening tabs (41, 42) connected to the drive device (2) with elastic form elements which can be inserted therein or injection moulded therewith as damping elements (51, 52).

10. Device according to at least one of the preceding claims characterised in that the gearing (22) of the drive device (2) is constructed in two stages (23, 24, 25).

11. Device according to at least one of the preceding claims characterised in that the output of the drive device (2) is formed as a hollow shaft with positive locking elements so that the drive device (2) is connectable on both end sides to a pinion or a cable drum for driving the translationally displaceable component (1, 3).

## Revendications

1. Dispositif permettant de déplacer des éléments structurels à déplacement en translation (1, 3) dans des véhicules automobiles, tels que des lève-vitre, des toits coulissants, ou similaires, comprenant un dispositif d'entraînement, susceptible d'être relié à un dispositif moteur, pour l'élément structurel (1, 3) à déplacement en translation, dans lequel :
a) l'élément structurel à déplacement en translation (1, 3) présente un perçage (10) pour la réception d'une pièce de liaison (6, 61) du dispositif d'entraînement,
b) le dispositif d'entraînement est relié à l'élément structurel (1, 3) à déplacement en translation au moyen d'un axe (6, 60), et capable de basculer autour de cet axe (6, 60), et
c) l'élément structurel à déplacement en translation (1, 3) est supporté sur le dispositif d'entraînement au moyen d'éléments de fixation ou de soutien (13 à 17 ; 41, 42) ainsi que d'éléments élastiques (16 à 19 ; 51, 52),
caractérisé en ce qu'un moteur d'entraînement (21) et une transmission de déplacement (22) en coopération avec celui-ci, appartenant au dispositif moteur (2), sont fixés au dispositif d'entraînement, ladite transmission de déplacement (22) étant accouplée via un élément moteur à un élément de transmission de force (7) fixé sur la carrosserie du véhicule, ce dernier élément convertissant le mouvement de l'élément moteur en un mouvement de translation du dispositif d'entraînement, et les éléments élastiques (16 à 19 ; 51, 52) étant réalisés de manière à pouvoir atteindre un amortissement prédéterminé du dispositif moteur (2) par un mouvement de pivotement du dispositif d'entraînement autour de l'axe (6, 60).

2. Dispositif selon la revendication 1, caractérisé en ce que l'élément structurel à déplacement en translation (3) comporte plusieurs évidements, ou traversées (30 à 34) pour la réception de l'axe (6, 60) ainsi que des éléments de fixation (13 à 17) du dispositif moteur (2).

3. Dispositif selon la revendication 2, caractérisé en ce que le boîtier (20) du dispositif moteur (2) comporte un bourrelet annulaire (61) qui s'étend axialement, ainsi que plusieurs éléments de fixation et d'amortissement (13 à 15 ; 16 à 19) agencés à l'extérieur de l'axe (60) du bourrelet annulaire (61) et du boîtier (20), écartés radialement les uns des autres.

4. Dispositif selon la revendication 3, caractérisé en ce que les moyens de fixation (13 à 15) et les moyens prévus sur l'élément structurel (3) à déplacement en translation pour la réception des moyens de fixation (13 à 15) sont accordés les uns aux autres sur le plan géométrique.

5. Dispositif selon l'une au moins des revendications précédentes, caractérisé en ce que les éléments de fixation (13 à 15) sont constitués par des boulons avec des têtes en forme de chapeau ou de bille, susceptibles d'être enfichés à travers des perçages (33), adaptés au diamètre des têtes des boulons, de l'élément structurel (3) à déplacement en translation, et susceptibles d'être mis en place par rotation du dispositif moteur (2) dans des évidements (34) radiaux adaptés au diamètre des tiges des boulons, et en ce que le dispositif moteur (2) est susceptible d'être bloqué vis-à-vis de la rotation au moyen des éléments d'amortissement (16 à 19) dans la position de fonctionnement.

6. Dispositif selon l'une au moins des revendications précédentes, caractérisé en ce que les éléments d'amortissement sont précontraints.

7. Dispositif selon la revendication 1, caractérisé en ce que l'élément structurel (1) à déplacement en translation est relié au dispositif moteur (2) par au moins un emplacement de soutien (41, 51 ; 42, 52) réalisé avec l'élasticité d'un ressort.

8. Dispositif selon la revendication 7, caractérisé en ce qu'un boulon de fixation (61), relié ou susceptible d'être relié au dispositif moteur (2), est enfiché à travers le perçage (10) de l'élément structurel (1) à déplacement en translation, et en ce qu'il est prévu des deux côtés du perçage (10) des emplacements de soutien (101, 102) pour l'agencement des éléments d'amortissement (51, 52).

9. Dispositif selon la revendication 8, caractérisé en ce que les emplacements de soutien (101, 102) sont prévus au niveau de l'arête inférieure (100) d'une vitre de fenêtre, et sont agencés en coopération de formes dans des pattes de fixation (41, 42), reliées au dispositif moteur (2), avec des éléments moulés élastiques, susceptibles d'être intégrés dans lesdites pattes, ou bien d'être injectés sur celles-ci, à titre d'éléments d'amortissement (51, 52).

10. Dispositif selon l'une au moins des revendications précédentes, caractérisé en ce que la transmission (22) du dispositif moteur (2) est réalisée à deux étages (23, 24, 25).

11. Dispositif selon l'une au moins des revendications précédentes, caractérisé en ce que la prise de force du dispositif moteur (2) est réalisée sous la forme d'un arbre creux avec des éléments à coopération de formes, de telle manière que le dispositif moteur (2) est susceptible d'être relié sur les deux faces frontales avec un pignon, ou bien avec un tambour à câble, pour l'entraînement de l'élément structurel (1, 3) à déplacement en translation.
